# EUROPÄISCHE PATENTANMELDUNG

(11) **EP 1 017 143 A1**
(43) Veröffentlichungstag der Anmeldung: **05.07.2000**
(21) Anmeldenummer: 99124425.2
(22) Anmeldetag: 07.12.1999
(51) Int. Cl.: H02G 7/10, H02G 1/04, G02B 6/48

(54) **Halte- oder Laschband**

(30) Priorität: 29.12.1998 DE 19860692
(71) Anmelder: SIEMENS AKTIENGESELLSCHAFT, 80333 München (DE)
(72) Erfinder: Schmidt, Ilona, Dr., 96472 Rödental (DE); Will, Sabine, 96465 Neustadt (DE); Zapf, Fredric, Dr., 96465 Neustadt (DE); Greiner, Ulrich, 96465 Neustadt (DE); Schneider, Reiner, 96237 Ebersdorf (DE); Müller, Thomas, 96515 Sonneberg (DE); Heinz, Edgar, 96523 Steinach (DE); Will, Horst, 96465 Neustadt (DE); Priesnitz, Ulrich, 96450 Coburg (DE)

(57) **Zusammenfassung**

Luftkabel werden üblicherweise mittels eines Laschbandes am Erd- oder Phasenseil einer Freileitung befestigt. Da der elastische Verbund zwischen Kabel und Seil selbst unter extremen Witterungsbedingungen über mehrere Jahre erhalten bleiben soll, muß auch das Laschband eine entsprechend hohe Lebensdauer besitzen.

Das nur etwa 0,2 - 2 mm dicke und 4 - 5 mm breite Halteband (1) besteht im wesentlichen aus einem zugfesten Trägerkörper (2) und einem den Trägerkörper (2) vollständig umhüllenden, ggf. mehrschichtig aufgebauten Kunststoffmantel (3), wobei die kabelseitige Mantelfläche mit einer Klebeschicht (4) und der Mantelrücken mit einer das Abziehen des Haltebandes (1) von einer Vorratstrommel erleichternden Trennschicht (5) versehen sind.

Laschband, zur dauerhaften und witterungsbeständigen Befestigung eines LWL-Luftkabels an einem Erd- oder Phasenseil.

## Beschreibung

### 1. Einleitung

Durch die Verlegung von Lichtwellenleiter-Luftkabeln in ihren Mittel- und Hochspannungstrassen gelang es überregionalen Energieversorgern, nahezu alle größeren Städte und Gemeinden unter Umgehung der Netze nationaler Telekommunikationsgesellschaften nachrichtentechnisch miteinander zu verbinden.

Zum Einsatz kommen hierbei insbesondere selbsttragende, d.h. eigenständig abspannbare Luftkabel und sogenannte ADL-Kabel (All-Dielectric-Lash). Während selbsttragende Luftkabel mit metallfreien, konzentrisch bezüglich der Kabellängsachse angeordneten Zugentlastungselementen (All-Dielectric-Self-Supporting- bzw. ADSS-Kabel) oder mit einem die Zugkräfte aufnehmenden Stahl-Trägerseil (Figur-8-Kabel) ausgestattet sind, besitzen ADL-Kabel keine eigenen Tragelemente. Sie werden üblicherweise mittels eines Klebe- oder Laschbandes an einem bereits montierten Erd- oder Phasenseil der Freileitung befestigt. Als optisches Übertragungselement dient beispielsweise eine zentral im Kabel angeordnete LWL-Bündelader. Da die LWL-Fasern, Faserbündel oder Faserbändchen mit definierter Überlänge in der Aderhülle liegen, werden sie selbst unter extremen Bedingungen (Sturm, große Temperaturschwankungen, Eislast, usw.) nicht mechanisch belastet.

### 2. Stand der Technik

Das in [1] beschriebene Laschband besteht im wesentlichen aus einer kleberbeschichteten und durch Glas- oder Aramidfasern verstärkten Kunststoff-Folie. Eine auf der kabelseitigen Fläche mittig angeordnete, die Klebefläche zu maximal 70 % abdeckende Aramidgarnschicht dient der Erhöhung der Reißfestigkeit. Trotz der guten Klebe- und Haftungseigenschaften des bekannten Laschbandes, mußte man in der Praxis immer wieder feststellen, daß sich das montierte Luftkabel nach einiger Zeit abschnittsweise vom jeweiligen Erd- oder Phasenseil ablöste, es auf mehreren Metern in Schlaufen durchhing und somit die Gefahr der Beschädigung durch starken Wind und Eislasten bestand. Verantwortlich für diesen Effekt waren Vögel, welche die fasrigen Anteile des Laschbandes an der betreffenden Stelle herausgezogen und es dadurch stark beschädigt bzw. nahezu völlig zerstört hatten. Außerdem erwies sich die verwendete Kunststoff-Folie als nicht ausreichend witterungsbeständig. So wurden die Aramidfasern allmählich freigelegt und damit der sie schädigenden UV-Strahlung ausgesetzt.

### 3. Gegenstand, Ziele und Vorteile der Erfindung

Die Erfindung betrifft ein Halte- oder Laschband zur dauerhaften Befestigung eines langgestreckten oder strangförmigen Objektes an einem ebenfalls langgestreckten oder strangförmigen Trägerelement. Ziel der Erfindung ist also insbesondere die Schaffung eines Laschbandes, mit dem sich ein optische Übertragungselemente (LWL-Fasern/Adern) enthaltendes Luftkabel an einem Erd- oder Phasenseil einer elektrischen Nieder-, Mittel- oder Hochspannungs-Freileitung befestigen läßt. Das Halteband soll eine hohe Lebensdauer besitzen, also insbesondere nicht durch Vögel beschädigt oder zerstört werden können. Ein Halte- oder Laschband mit den in Patentanspruch 1 angegebenen Merkmalen besitzt diese Eigenschaften. Die abhängigen Ansprüche betreffen vorteilhafte Ausgestaltungen und Weiterbildungen des Haltebandes.

Der vorgeschlagene Aufbau des Haltebandes stellt sicher, daß die Lebensdauer der aus dem Luftkabel und dem Trägerseil bestehende, mit dem Halteband spiral- oder kreuzwendelförmig umwickelte Einheit bis zu 20 Jahre beträgt. Das elastisch mit dem Seil verbundene Luftkabel ist zudem keinen oder nur schwachen Zugkräften ausgesetzt. Außerdem treten keine größeren Relativbewegungen in Längsrichtung des Kabels auf. Das aufgrund seines dielektrischen Aufbaus auch im Bereich hoher Feldstärken einsetzbare Halteband unterdrückt bzw. verhindert Eigenschwingungen des Kabels wirkungsvoll. Seine Querdruckfestigkeit ist so bemessen, daß man das mit dem Halteband umwickelte Trägerseil weiterhin mit Überwachungssonden oder anderen, auf Rollen geführten Maschinen befahren kann.

### 4. Zeichnungen

Die Erfindung wird im folgenden anhand der Zeichnung erläutert. Es zeigen:
- Figur 1: den schematischen Aufbau eines Haltebandes in teilperspektivischer Darstellung;
- Figur 2/3: Haltebänder mit jeweils ebenen Trägerkörpern und kabelabseitig konvex gewölbten Mänteln;
- Figur 4: ein kabelseitig konvex gewölbtes Halteband mit einem konkav gewölbten Rücken;
- Figur 5: ein mit einem bandförmigen Trägerkörper und stabförmigen Verstärkungselementen ausgestattetes Halteband;
- Figur 6 - 9: Ausführungsbeispiele von Haltebändern, welche jeweils mehrere, in einer Ebene äquidistant angeordnete, die Zugkräfte aufnehmende Trägerelemente aufweisen;
- Figur 10: ein Halteband mit hantelförmigem Querschnitt;
- Figur 11/12: vorformbare Haltebänder, deren Mäntel jeweils aus zwei Schichten bestehen;
- Figur 13: eine Einrichtung zur Kühlung und Vorformung eines Haltebandes;
- Figur 14: die durch Anlaschen erzeugte, aus dem optischen Kabel und dem Trägerseil bestehende Einheit und
- Figur 15/16: Ausführungsbeispiele von ADL-Kabeln, jeweils im Querschnitt.

### 5. Beschreibung der Ausführungsbeispiele

### a) Aufbau und Struktur des Haltebandes

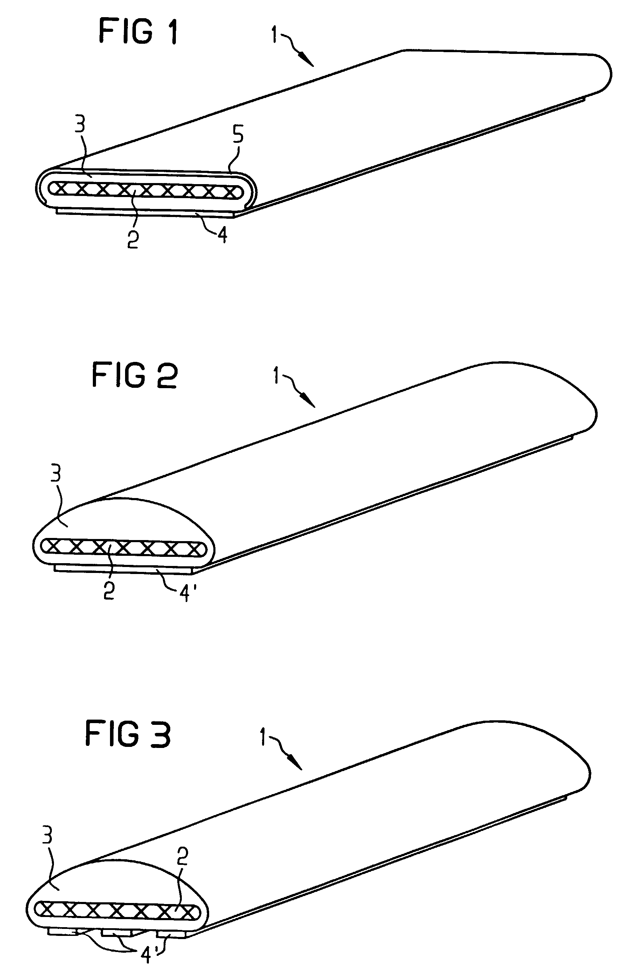

Das in Figur 1 nicht maßstabsgetreu dargestellte Halteband 1 besteht im wesentlichen aus einem zugfesten Trägerkörper 2 und einem den Trägerkörper 2 vollständig umhüllenden Mantel 3, wobei die kabelseitige Mantelfläche mit einer Kleberschicht 4 oder einem Kleber 4' und die kabelabseitige Mantelfläche (Mantelrücken) mit einer das Abziehen des Haltebandes 1 von einer Vorratsrolle erleichternden Trennschicht 5 versehen sind. Die Breite des etwas 0,5 - 2,0 mm dicken Haltebandes 1 beträgt typischerweise 2 mm - 15 mm, vorzugsweise 4,0 - 4,5 mm. Der Trägerkörper 2 verleiht dem Halteband 1 die erforderliche Zugfestigkeit. Er kann beispielsweise aus einem glasfaserverstärkten Kunststoff oder einer flexiblen/dauerelastischen Kunststoffmatrix mit darin eingebetteten, sich in Richtung der Längsachse des Bandes 1 erstreckenden Verstärkungselementen (Glasfasern, Glasfilamenten, Kohlefasern, Aramiden) oder einem Aramid-Gewebeband bestehen. Die Verwendung eines Schmelzklebers als Kunststoffmatrix hat den Vorteil, daß der Trägerkörper 2 mit dem in einem Extruder in flüssiger Form aufgebrachten Mantelmaterial spaltenfrei und dauerhaft zu einer in ihrer Längsrichtung wasserdichten Einheit verklebt.

Als Mantelmaterialen eignen sich insbesondere silanvernetztes Polyethylen (PE), Polypropylen (PP), Polyamid (PA), Polyvinylclorid (PVC) oder ein Fluorkunststoff, denen die bekannten Stabilisatoren (UV- und Sauerstoffstabilisatoren, Metalldesaktivatoren) und Ruß (schwarze Einfärbung) zugesetzt sind. Die die Kurzschlußfestigkeit des Laschbandes 1 verbessernde und beispielsweise durch Bestrahlung mit UV-/ IR-Licht oder Elektronen hervorgerufene Vernetzung des Mantelmaterials kann hierbei während oder nach der Extrusion bzw. erst bei der Montage erfolgen.

Der schon während der Extrusion des Mantels 2 und der Trennschicht 5 oder erst nachträglich mittels einer Düse kabelseitig aufgebrachte Kleber sollte bei Temperaturen im Bereich zwischen T = -20°C und T = +40°C dauerelastisch bleiben und auch bei tiefen Temperaturen nicht verhärten oder verspröden. Die kabelseitige Mantelfläche wird daher vorzugsweise mit einen Schmelzklebereigenschaften aufweisenden Haftkleber beschichtet.

### b) Kleber/Kleberformulierungen

Als Haftkleber bezeichnet man Substanzen, deren Klebewirkung sich gegebenenfalls nach dem Abdampfen eines Lösungsmittels aufgrund ihrer permanent klebrigen Konsistenz und der Ausübung eines geringen Druckes entfaltet. Bei Verwendung bestimmter Klebertypen (beispielsweise Silikonen) und spezieller Mantelmaterialien (Polyolefine, wie Polyethylen oder Polypropylen) ist es angebracht, die kabelseitige Mantelfläche vorab mit einem Haftvermittler (Primer) zu beschichten.

Besonders bewährt haben sich Haftkleber mit Schmelzklebereigenschaften, also "Kleberformulierungen", die sich wie ein Schmelzkleber thermoplastisch verarbeiten lassen, aber auch bei tiefen Temperaturen sowie bei Raumtemperatur noch deutlich klebrige Eigenschaften besitzen. Sie bestehen vorzugsweise aus einem polymeren Bindemittel (Anteil 10 - 70 Gew.%), einem Weichmacher (Anteil 0 Gew.% - 80 Gew.%) und einem adhesiv wirkenden, die Klebewirkung hervorrufenden Tackifier (Klebrigmacher); (Anteil 1 - 80 Gew.%). Das Bindemittel kann insbesondere aus einem unvernetzten, bzw. teilvernetzten Polymer oder Elastomer, vorzugsweise auf Basis von Kautschuk, Polyisopren, Polybutadien, Styrol-Butadien-Copolymer, Ethylen-Propylen-Terpolymer (EPDM), Chloropren, Acrylnitril, PVC, Polyvinylacetat, Polyvinylether, Poly-alkyl-acrylat, Phenol-harzen, Polyamid, Polyester und Silikon bestehen. Als Weichmacher sind dem Bindemittel synthetische, bzw. mineralische Kohlenwasserstofföle, paraffinisch und/oder aromatische, organische, hochsiedende Lösungsmittel, PVC-Weichmacher und Silikonöle, je nach verwendetem Polymer einzeln oder als Gemisch zugesetzt.

Aufgrund ihrer hohen Alterungsstabilität werden bevorzugt synthetische Klebrigmacher auf Basis von Polyisobutylen, Polybuten oder EPDM eingesetzt. Wegen hydrolyseempfindlicher Gruppierungen weniger geeignet, aber prinzipiell ebenfalls verwendbar, sind Alkydharze, d.h. Polyester von Fettsäuren sowie Phenol- bzw. Resolharze.

Die Haftung des Haltebandes 1 am Trägerseil läßt sich auch dadurch erreichen, daß man beispielsweise einen synthetischen Klebrigmacher auf Basis von Polyisobutylen, Polybuten oder EPDM mit dem Mantelmaterial (vorzugsweise ein Polyolefin) vermengt (eincompoundiert), wobei der Anteil des Klebrigmachers 20 - 60 Gew.% betragen kann.

Polyacrylate besitzen auch ohne Zusatz eines Tackifiers eine ausreichend hohe Klebewirkung. So kann man beispielsweise auch Butyl- oder Ethylhexyl-Polyacrylate als licht- und wärmestabile, ähnlich einem Schmelzkleber verarbeitbare Haftkleber verwenden.

Außer den erwähnten Haftklebern mit Schmelzklebereigenschaften, lassen sich selbstverständlich auch Lösungsmittel-, Dispersions- und Kontaktkleber, chemisch aushärtende Kleber sowie eine Kombination von Klebern (Haftkleber + Schmelzkleber) einsetzen. Als Schmelzkleber kommen dann beispielsweise licht- und hydrolysestabile Materialien auf Basis von Ethylvinyl-acetat, gegebenenfalls mit Zusätzen an weichen Polyolefinen (z.B. LLDPE) oder Copolymere aus diesen Stoffen in Betracht.

Als klebende Substanz eignet sich prinzipiell auch ein zweikomponentiger, zu 1-80 Gew.% aus einem Harz (Komponente A) und bis zu 1-80 Gew.% aus einem Härter (Komponente B) bestehender (2K-) Reaktionsklebstoff. Nach gründlicher Durchmischung reagieren die beiden Komponenten A und B chemisch miteinander (Polyaddition), um ab einer Temperatur T ≈ 0°C auszuhärten. Als Klebstoffkomponenten A/B kommen beispielsweise die Kombinationen Epoxidharz/Amin oder Isocyanatharz/Polyol (Polyurethanklebstoff) in Betracht. Durch den Einbau kautschukelastischer Partikel in den Epoxidkleber bzw. durch geeignete Auswahl der Isocyanat- und Polyolkomponenten (PUR-Klebestoft) läßt sich trotz hoher Festigkeit noch eine ausreichende Elastizität des 2K-Reaktionsklebstoffs gewährleisten.

Zur Beschichtung der kabelseitigen Mantelfläche des Haltebandes 1 mit dem 2K-Reaktionsklebstoff werden die beiden Komponenten A/B im gewünschten Mischungsverhältnis in eine zweigeteilte Kartusche eingefüllt, bei Bedarf durch einen Mischkopf gedrückt und einer an der Laschmaschine befestigten Auftragsvorrichtung zugeführt (siehe beispielsweise [2]).

Bei feuchteaushärtenden Klebstoffsystemen bildet die Luftfeuchtigkeit die Komponente B des 2K-Reaktionsklebstoffs, d.h. die Vernetzung/Aushärtung beginnt mit dem Zutritt von Luft. Geeignete Vertreter dieser Klebstoffklasse sind Isocyanat-(Polyurethan-)klebstoffe und die unter dem Namen Silikon-RTV-Klebstoffe bekannten Systeme.

Verwendbar sind auch wärmeaushärtende Klebstoffsysteme. Bei diesen 1-komponentigen Reaktionsklebstoffen erfolgt die Vernetzung/Aushärtung des in Form einer Mischung vorliegenden Klebstoffsystems durch Zugabe von Wärme. In Frage kommen Epoxidharze und Polyurethane.

Da das montierte Halteband 1 intensiver Sonnenstrahlung, Feuchtigkeit und Wärme ausgesetzt ist, muß auch der aufgebrachte Kleber 4' entsprechend präpariert und stabilisiert sein. Als thermische Stabilisatoren eignen sich insbesondere Antioxydantien (Handelsname "Irganox 1010", Fa. Ciba). Chemisch sind diese Stoffe meist sterisch gehinderte Phenole, Phosphite oder Phosphonite. Sterisch gehinderte Armine (Handelsname "Tinovin", Fa. Ciba) haben sich als Lichtschutzmittel bewährt. In Frage kommt auch der Zusatz spezieller UV-Ruße, wie "Corax P" der Fa. Degussa. Aus wirtschaftlichen Gründen sollte der Gehalt aller Stabilisatoren im Kleber 3 Gew.% nicht überschreiten.

### c) Trennschicht/Trennmittel

Die nur etwa 0,01 - 0,5 mm dicke, durch Koextrusion, d.h. gleichzeitig mit dem Mantel 3 hergestellte Trennschicht 5 verhindert das Verkleben der auf der Vorratstrommel aufeinander liegenden Flächen des Haltebandes 1 und erleichtert bzw. ermöglicht erst das nahezu kräftefreie Abtrommeln während der Montage. Die Trennschicht 5 besteht vorzugsweise aus demselben Material wie der Mantel 3, insbesondere aus dem eine Kettenstruktur aufweisenden LLDPE oder einem anderen, auf dem Mantel 3 gut haftenden Polymermaterial. Außer den schon genannten Stabilisatoren (UV- und thermische Stabilisatoren usw.) ist dem Material der Trennschicht 5 noch ein Antihaftmittel zugesetzt. Besonders bewährt hat sich die Verwendung eines Siliconelastomers (z.B. Silikonkautschuk, wie Methylvinylsilicon) als Antihaftmittel. Es wird in einem sog. Innenkneter oder einem Mischwalzwerk mit dem rußgeschwärzten LLDPE vermengt (eincompoundiert), wobei der Anteil des Silikonelastomers 5-50 Gew.% betragen kann. Da das Siliconelastomer keine chemische Bindung mit dem LLDPE eingeht, wird es allmählich durch die PE-Molekülketten verdrängt, gelangt schließlich an die Oberfläche der Schicht 5 (Migration), wo es seine Trennwirkung bezüglich des Klebstoffs entfaltet. Um die Kurzschlußfestigkeit der Trennschicht 5 zu verbessern, kann man diese beispielsweise noch durch Bestrahlung mit IR-Licht, UV-Licht oder Elektronen vernetzen.

Als Trenn- oder Antihaftmittel kommen neben Silikonelastomeren noch Teflon, Ca-Stearate, Wachse und Säureamide in Betracht. Es ist selbstverständlich auch möglich, das Trenn-/Antihalftmittel in Form einer UV- oder thermisch aushärtenden Emulsion oder unmittelbar durch Lackieren aufzubringen. Die Trennschicht 5 hat außerdem die Eigenschaft, daß sie den Mantel 3 vor intensiver UV-Strahlung schützt und gleichzeitig noch schmutz- und wasserabweisend wirkt.

### d) Mäntel mit gekrümmten Oberflächen

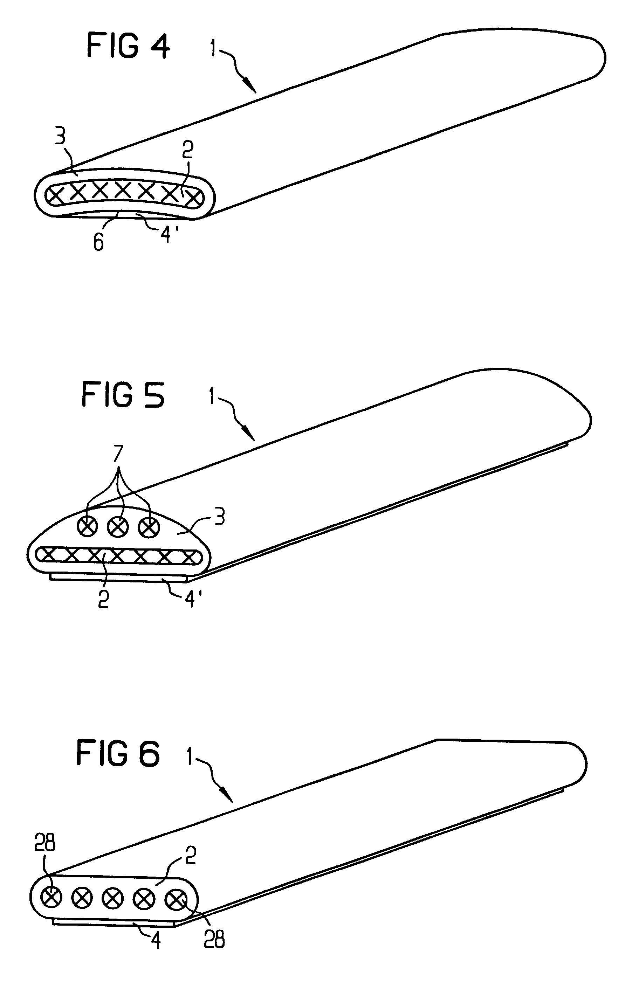

Die Haftung übereinander liegender Wickellagen des Haltebandes 1 auf der Vorratstrommel läßt sich deutlich verringern, indem man den ebenen Trägerkörper 2 mit einem kabelabseitig konvex gekrümmten Mantel 3 umhüllt (vergleiche Figur 2 und 3) und den Mantelrücken mit einer Trennschicht versieht (nicht dargestellt) oder mit einem Trennmittel behandelt. In dieser Hinsicht dieselben Eigenschaften besitzt das in Figur 4 dargestellte Halteband 1, dessen gekrümmter Trägerkörper in einen Mantel 3 annähernd konstante Stärke eingebettet ist. Die kabelseitige, sich in Richtung der Bandlängsachse erstreckende Vertiefung 6 dient der Aufnahme des Klebers 4'. Während des Andrückens des Haltebandes 1 an das Kabel bzw. Trägerseil wirken die am Kabel/Trägerseil anliegenden Mantelbereiche als elastische Dichtlippen, welche das seitliche Ausweichen des Klebers 4' verhindern oder zumindest erschweren.

Demgegenüber besitzen die Haltebänder gemäß den Figuren 2 und 3 jeweils eine weitgehend ebene und ganzflächig oder streifenförmig mit Kleber 4' beschichtete kabelseitige Mantelfläche. Diese Mantelfläche sollte nicht glatt ausgeführt, sondern mit einer Struktur (gewürfelt, gerillt) versehen oder zumindest aufgerauht sein, so daß auch nach einer Druckbelastung noch eine ausreichende Menge Kleber 4' zwischen dem Halteband 1 und dem Kabel/Seil erhalten bleibt. Die kabelseitige Mantelfläche läßt sich beispielsweise mittels eines auf dem noch weichen Mantelmaterial ablaufenden Prägerades in der gewünschten Weise strukturieren oder mechanisch sowie durch Behandlung mit einer Säure oder einem Lösungsmittel aufrauhen.

### e) Verstärkte Haltebänder/Haltebänder mit stark strukturierter Oberfläche

Das in Figur 5 dargestellte Halteband 1 kommt insbesondere bei der Montage eines vergleichsweise schweren Luftkabels an einem Erd- oder Phasenseil zum Einsatz. Außer den schon beschriebenen Komponenten (Trägerkörper 2, Mantel 3, Klebeschicht, Trennschicht) enthält das Halteband 1 mehrere stabförmige, sich in Richtung der Bandlängsachse erstreckende Verstärkungselemente 7. Diese in das Mantelmaterial eingebetteten, durch Koextrusion hergestellten und in einer Ebene, vorzugsweise äquidistant angeordneten Verstärkungselemente 7 können beispielsweise aus einem glasfaser- oder kohlefaserverstärkten Kunststoff, sog. LCP's (Liquid Crystal Polymers), Polycarbonat, Aramiden oder einer Kunststoffmatrix mit darin eingebetteten, in Richtung der Bandlängsachse orientierten Glasfilamenten/Whiskern bestehen, also insbesondere sowohl zugfest als auch stauchfest ausgebildet sein (siehe beispielsweise [3]).

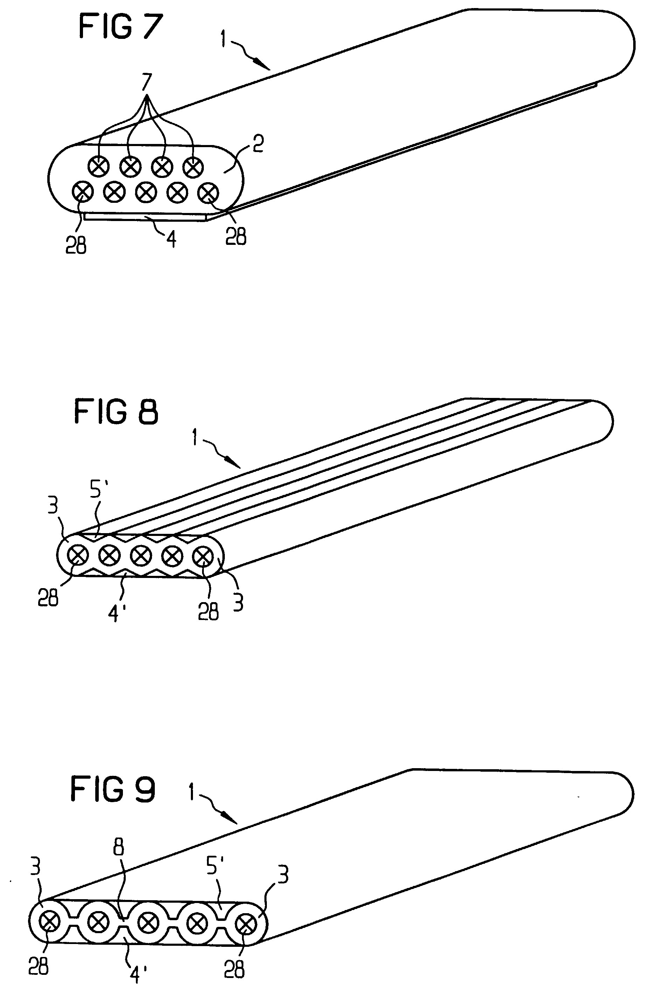

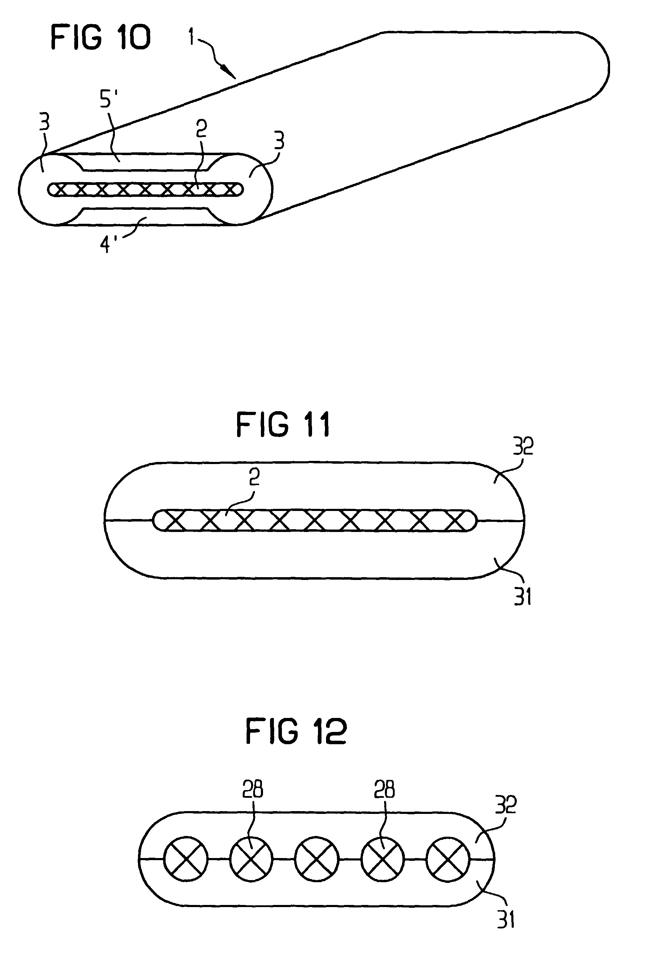

Wie die Figuren 6 bis 9 zeigen, muß der Trägerkörper des Haltebandes 1 nicht notwendiger Weise eine zusammenhängende Einheit bilden. So können auch jeweils mehrere in einer Ebene äquidistant angeordnete, strangförmige Elemente 28 die auf das Band 1 wirkenden Zugkräfte und damit die Funktion des oben beschriebenen bandförmigen Trägerkörpers 2 übernehmen. Die sich jeweils in Längsrichtung des Bandes 1 erstreckenden, also vorzugsweise parallel ausgerichteten Elemente 28 bestehen wieder aus den schon genannten Materialien (faserverstärkter Kunststoff usw.). Der die stabförmigen Elemente 28 umhüllende Mantel 2 kann sowohl kabelseitig als auch kabelabseitig eben ausgebildet (vergleiche Figur 6 und 7) oder jeweils beidseitig mit V-förmigen, in Richtung der Bandlängsachse verlaufenden Nuten zur Aufnahme des Klebers 4' bzw. des Trennmittels 5' versehen sein (vergleiche Figur 8). Eine ähnlich strukturierte Oberfläche besitzt das in Figur 9 dargestellte Halteband 1. Bei diesem äußerst flexiblen und quer zur Bandlängsachse leicht biegbaren Halteband 1 sind benachbarte, jeweils mit einem zylindrischen Mantel versehene Elemente 28 durch einen dünnen Steg 8 aus Mantelmaterial miteinander verbunden. Der kabelseitig aufgebrachte Kleber ist wieder mit 4', das auf dem Bandrücken vorhandene Trennmittel mit 5' bezeichnet.

Das in Figur 10 dargestellte Halteband 1 besteht aus einem bandförmigen, die Zugkräfte aufnehmenden Trägerkörper 2 und einem im Querschnitt hantelförmigen Mantel 3. Die annähernd zylindrischen Randstücke des Mantels 3 bilden zusammen mit dem den Großteil des Trägerkörpers 2 gleichförmig umhüllenden Steg 3' zwei sich nahezu über die gesamte Breite des Haltebandes 1 erstreckende, flache Vertiefungen, welche die Klebeschicht/ den Kleber 4' bzw. die Trennschicht/das Trennmittel 5' aufnehmen.

### f) Vorformbare Haltebänder

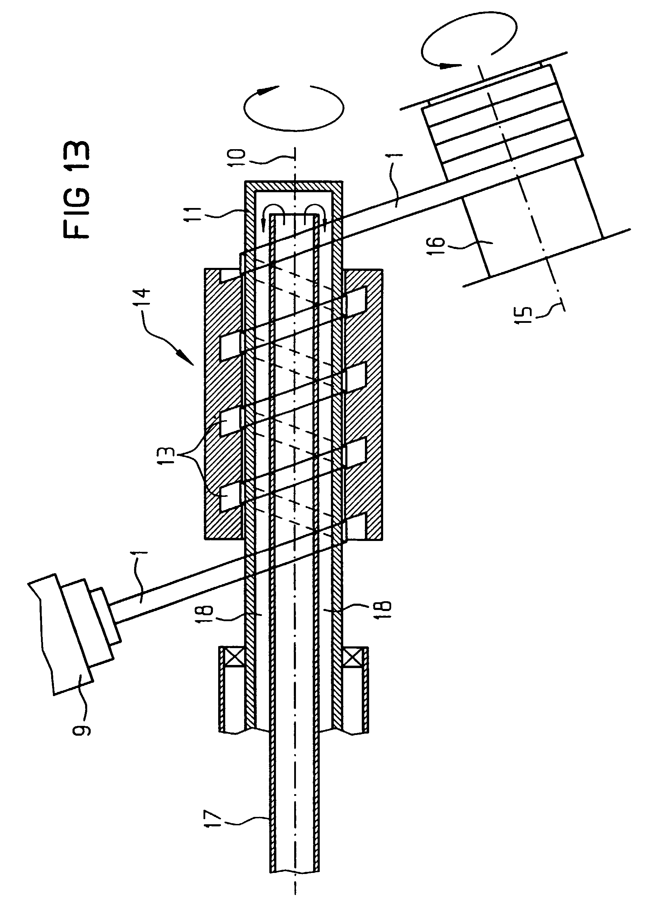

Die Figuren 11 und 12 zeigen Haltebänder 1, deren Mäntel jeweils aus einer kabelseitigen inneren Schicht 31 und einer kabelabseitigen äußeren Schicht 32 bestehen, wobei der Trägerkörper 2 (vergleiche Figur 11) bzw. die die Zugkräfte aufnehmenden, strangförmigen Elemente 28 (vergleiche Figur 12) zwischen den beiden während der Abkühlung unterschiedlich stark schrumpfenden Mantelschichten 31/32 angeordnet sind. Als Material für die äußere Mantelschicht 32 eignen sich insbesondere Polyamid oder ein gefüllter Kunststoff (mit Kreide oder kurzen Glasfasern gefülltes PA bzw. PE). Die demgegenüber stärker schrumpfende Mantelschicht 31 wird vorzugsweise aus Polyethylen oder Polypropylen gefertigt. Durch Verwendung unterschiedlich stark schrumpfender Materialien für die beiden Mantelschichten 31/32 kann man dem Halteband 1 eine innere Spannung einprägen, welche das wendel- bzw. spiralförmige Umwickeln der aus dem Trägerseil und dem optischen Kabel gebildeten Einheit erleichtert. Um diesen "Memory-Effekt" noch zu verstärken, wird, wie in Figur 13 dargestellt, das heiß aus dem Extruderkopf 9 austretende und bereits mit dem Kleber und/oder dem Trennmittel beschichtete Halteband 1 einem um die Längsachse 10 rotierenden Dorn 11 zugeführt, von einer raumfest angeordneten, spiralförmig verlaufende Führungskanäle 13 aufweisenden Schnecke 14 in Richtung des Dornendes mitgenommen und schließlich auf eine um ihre Achse 15 rotierende Vorratstrommel 16 aufgewickelt. Zur Kühlung des Dorns 11 und damit des wendel- oder spiralförmig aufliegenden Haltebandes 1, wird Wasser mittels eines koaxial im Inneren des Dorns 11 angeordneten Rohres 17 zugeführt und über den zwischen dem Dorn 11 und dem Rohr 17 vorhandenen Ringspalt 18 abgeleitet.

### g) ADL-Kabel

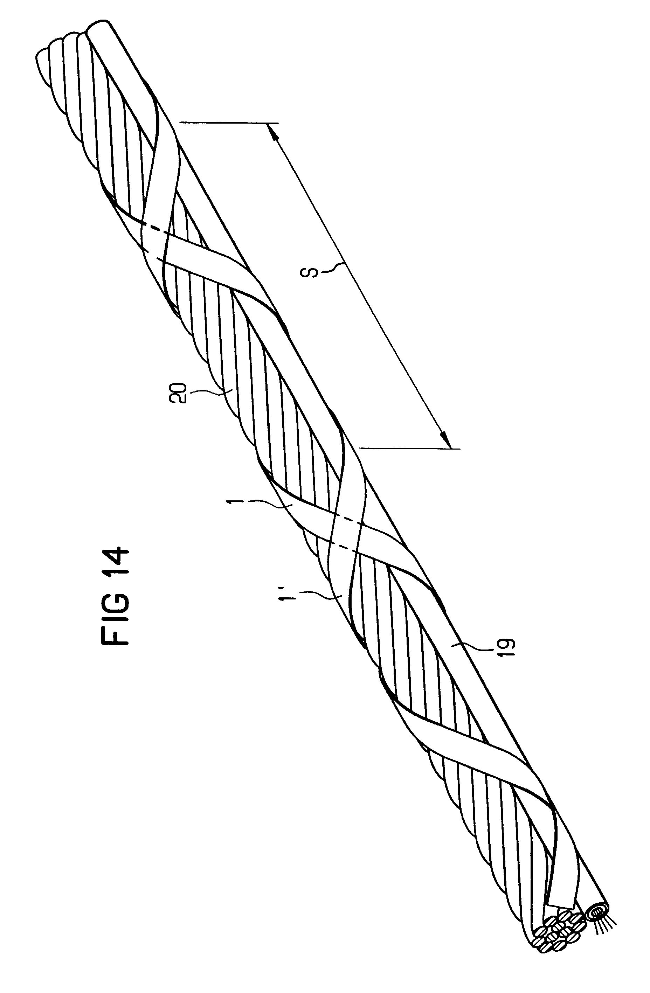

Die Figur 14 zeigt den durch die zwei im Kreuz- oder Gegenschlag aufgebrachte Laschbändern 1/1' erzeugten Verbund zwischen dem Luftkabel 19 (Außendurchmesser d = 4 - 8 mm) und dem jeweiligen Trägerelement/Trägerseil 20 (Erd- oder Phasenseil) der Freileitung. Die Schlaglänge der beispielsweise mit Hilfe der in [2] oder [4] beschriebenen Laschmaschine angebrachten Haltebänder 1/1' beträgt typischer Weise S = 50 - 1000 mm.

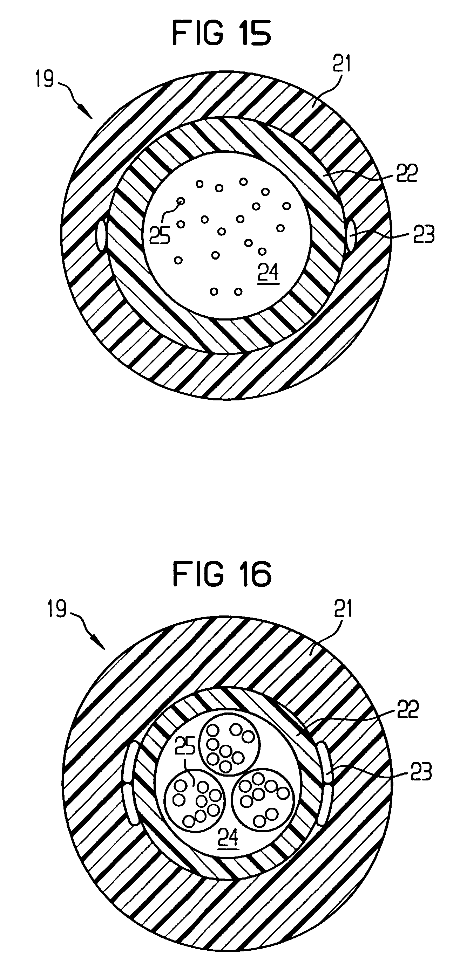

Das unterhalb des Trägerseils 20 und parallel zu diesem ausgerichtete Luftkabel 19 ähnelt im Aufbau den aus [5-7] bekannten Kabeltypen. Wie in den Figuren 15 und 16 dargestellt, besteht es beispielsweise aus einem UV-beständigen Außenmantel 21 (Polyethylen, Polypropylen), einem mit dem Außenmantel 21 verklebten Zentralrohr 22 (schrumpfarmer Kunststoff, insbesondere Polycarbonat, Polyamid; LCP, Polyetherimid PEI), eine Anzahl N ≥ 2 symmetrisch, ggf. auch paarweise symmetrisch bezüglich der Kabellängsachse zwischen dem Außenmantel 21 und dem Zentralrohr 22 angeordneter zug- und/oder stauchfester Elemente 23 (zugfeste Elemente: Aramidgarne, Glasgarne, Kohlenstoff-Fasern, glasfaserverstärkter Kunststoff usw., vorzugsweise mit einem Quellmittel beschichtet oder in anderer Weise längswasserdicht präpariert; stauchfeste Elemente: LCP-Materialien, Polycarbonat), einer das Zentralrohr 22 vollständig ausfüllten, thixotrope Eigenschaften aufweisenden Masse und einer Vielzahl mit Überlänge in das Zentralrohr 22 eingebrachter ggf. zu Bündeln oder Bändchen zusammengefaßter LWL-Fasern 25. Ein Haftvermittler 26 sorgt für eine innige Verbindung zwischen dem einen kleinen Längenausdehnungskoeffizienten aufweisenden Zentralrohr 22 ("Innenmantel") und dem bei tiefen Temperaturen stärker schrumpfenden Außenmantel 21.

### 6. Ausgestaltungen und Weiterbildungen

Die Erfindung beschränkt sich selbstverständlich nicht auf die oben beschriebenen Ausführungsbeispiele. So ist es ohne weiteres möglich, auch Kupferdatenkabel, stromführende Nieder-, Mittel- und Hochspannungskabel, elektrische und optische Leiterelemente enthaltende Hybridkabel sowie Betriebsstoffleitungen ( 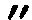 Minipipelines") für die Medien Preßluft, Gase, Öle, Wasser usw. an ausreichend zugfesten/belastbaren Trägerseilen/-rohren und langgestreckten/strangförmigen Objekten zu befestigen. Da sich der Kunststoffmantel des Haltebandes auf Grund der starken Reibung auch ohne die Klebeschicht nur sehr schwer längs des Trägerseils verschieben läßt, kann man gegebenenfalls auf die Klebeschicht und damit auch auf die Trennschicht verzichten.

### 7. Druckschriften

[1] WO 96/38892
[2] DE 196 41 057 A1
[3] US 5,360,497
[4] WO 97/39372
[5] DE 196 05 276
[6] US 5,138,683
[7] US 4,743,085

## Patentansprüche

1. Halteband, zur Befestigung eines ersten langgestreckten Objektes (19) an einem zweiten langgestreckten Objekt (20) mit einem Zugkräfte aufnehmenden Trägerkörper (2, 28) und einem den Trägerkörper (2, 28) vollständig umhüllenden Mantel (3).

2. Halteband nach Anspruch 1,
**dadurch gekennzeichnet, daß** eine objektseitige Oberfläche des Mantels (3) mit einer Klebeschicht (4) oder einer klebende Eigenschaften aufweisenden Substanz (4') versehen ist.

3. Halteband nach Anspruch 1 oder 2,
**gekennzeichnet durch** sich in Längsrichtung des Haltebandes (1) erstreckende, in den Mantel (3) eingebettete, zugfeste und/oder stauchfeste Verstärkungselemente (7).

4. Halteband nach Anspruch 3,
**dadurch gekennzeichnet,**
daß die Verstärkungselemente (7) in einer Ebene äquidistant angeordnet sind.

5. Halteband nach einem der Ansprüche 1 bis 4,
**gekennzeichnet durch** einen bandförmigen Trägerkörper (2).

6. Halteband nach einem der Ansprüche 1 bis 4,
**dadurch gekennzeichnet,**
daß der Trägerkörper mehrere strangförmige Elemente (28) aufweist, wobei die strangförmigen Elemente (28) in einer Ebene angeordnet und jeweils annähernd parallel zur Längsachse des Haltebandes (1) ausgerichtet sind.

7. Halteband nach Anspruch 6,
**dadurch gekennzeichnet,**
daß das Mantelmaterial die strangförmigen Elemente (28) jeweils rohrförmig umhüllt und daß benachbarte ummantelte Elemente (28) jeweils durch einen Steg (8) miteinander verbunden sind.

8. Halteband nach einem der Ansprüche 1 bis 7,
**dadurch gekennzeichnet,**
daß der Mantelrücken mit einer Trennschicht (5) versehen oder mit einem Trennmittel (5') beschichtet ist.

9. Halteband nach einem der Ansprüche 1 - 6 oder 8,
**dadurch gekennzeichnet,**
daß die objektseitige Mantelfläche und/oder der Trägerkörper (2) konkav gewölbt sind.

10. Halteband nach einem der Ansprüche 1 - 6 oder 8,
**dadurch gekennzeichnet,**
daß der Mantelrücken konvex gewölbt ist.

11. Halteband nach einem der Ansprüche 1 - 9,
**dadurch gekennzeichnet,**
daß die objektseitige Mantelfläche und/oder der Mantelrücken zumindest eine sich in Richtung der Längsachse des Haltebandes (1) erstreckende Vertiefung (6) aufweisen.

12. Halteband nach Anspruch 11,
**dadurch gekennzeichnet,**
daß die Klebeschicht (4), die klebende Substanz (4'), die Trennschicht (5) oder das Trennmittel (5') in der Vertiefung angeordnet sind.

13. Halteband nach einem der Ansprüche 1 - 6 und 8,
**dadurch gekennzeichnet,**
daß die objektseitige Mantelfläche strukturiert oder aufgerauht ist.

14. Halteband nach einem der vorhergehenden Ansprüche,
**dadurch gekennzeichnet,**
daß es einen hantelförmigen Querschnitt aufweist.

15. Halteband nach einem der Ansprüche 1 bis 14,
**dadurch gekennzeichnet,**
daß der Trägerkörper (2) oder die strangförmigen Elemente (28) aus einem faserverstärkten Kunststoff, einem dauerelastischen Kunststoff mit darin eingebetteten Glasfilamenten oder Aramiden bestehen.

16. Halteband nach Anspruch 15,
**gekennzeichnet durch** einen Schmelzkleber als dauerelastischer Kunststoff.

17. Halteband nach einem der vorhergehenden Ansprüche,
**dadurch gekennzeichnet,**
daß der Mantel (2) aus einem dauerelastischen und witterungsbeständigen Material besteht.

18. Halteband nach einem der Ansprüche 1 - 16,
**gekennzeichnet durch** einen zweischichtigen Mantel (31, 32), wobei einer objektseitige erste Schicht (31) des Mantels aus einem ersten Material und eine objektabgewandte zweite Schicht (32) des Mantels aus einem weniger stark schrumpfenden zweiten Material besteht.

19. Halteband nach einem der vorhergehenden Ansprüche,
**dadurch gekennzeichnet,**
daß die klebrige Eigenschaften aufweisende Substanz (4') ein Schmelzklebereigenschaften aufweisender Haftkleber ist.

20. Halteband nach Anspruch 19,
**dadurch gekennzeichnet,**
daß die Substanz (4') ein Bindemittel, einen Klebrigmacher und ggf. einen Weichmacher enthält, wobei der Anteil des Bindemittels bis zu 70 Gew.%, der Anteil des Klebrigmachers 1 - 80 Gew.% und der Anteil des Bindemittels 0 - 80 Gew.% betragen.
